# EUROPÄISCHE PATENTSCHRIFT

(11) **EP 2 016 025 B1**
(45) Veröffentlichungstag und Bekanntmachung des Hinweises auf die Patenterteilung: **13.08.2014**
(21) Anmeldenummer: 07728513.8
(22) Anmeldetag: 25.04.2007
(51) Int. Cl.: C01B 3/32, C01B 3/38, C01F 7/06, C01G 49/08, C04B 18/04, B03C 1/30, B01D 21/00

(54) **Verfahren zur Wertstoffgewinnung mittels Rotschlamm**
Method for obtaining valuable products based on red mud
Procédé de production de matière de valeur à partir de boue rouge

(30) Priorität: 04.05.2006 DE 102006020841
(43) Veröffentlichungstag der Anmeldung: 21.01.2009
(73) Patentinhaber: KRSYS GmbH, 81541 München (DE)
(72) Erfinder: KRAUSE, Eberhard, 16540 Hohen Neuendorf (DE); RÖHM, Valentin, 80714 München (DE)
(74) Vertreter: Hofstetter, Schurack & Partner
(86) Internationale Anmeldenummer: PCT/EP2007/054058
(87) Internationale Veröffentlichungsnummer: WO 2007/128696

(56) Entgegenhaltungen:
- WO-A-2005/042405
- BE-A- 676 016
- US-A- 3 295 924
- US-A- 3 876 749
- US-A- 4 260 472
- XIANG ET AL: "Low-temperature reduction of ferric iron in red mud" TMS LIGHT METALS: LIGHT METALS. PROCEEDINGS OF THE TECHNICAL SESSIONS, TECHNICAL TMS ANNUAL MEETING, XX, XX, 2001, Seiten 157-162, XP008085500
- "GAS PROCESSING, BENFIELD PROCESS"[Online] 2000, XP002457541 Gefunden im Internet: URL:http://www.uop.com/objects/99%20Benfie ld.pdf> [gefunden am 2007-11-02]
- PIGA L ET AL: "RECOVERING METALS FROM RED MUD GENERATED DURING ALUMINA PRODUCTION" JOM, MINERALS METALS & MATERIALS SOCIETY, WARRENDALE, PA, US, Bd. 45, Nr. 11, 1. November 1993 (1993-11-01), Seiten 54-59, XP000415000 ISSN: 1047-4838
- ELVERS, B., HAWKINS, S., RAVENSCROFT, M, SCHULZ, G.: "Ullmann's Encyclopedia of Industrial Chemistry. Edition 5. Vol. A14: Immobilised Biocatalysts to Isoprene" 1989, VCH VERLAG , WEINHEIM, DE , XP002457543 Seite 479 - Seite 480
- PAREDES, J.R., ORDONEZ, S., VEGA, A., DIEZ, F.V.: "Catalytic combustion of methane over red mud-based catalysts" APPLIED CATALYSIS B: ENVIRONMENTAL, Bd. 47, 2004, Seiten 37-45, XP002457542
- KLOPRIES, B., HODEK, W., BANDERMANN, F.: "Catalytic hydroliquefaction of biomass with red mud and CoO-MoO3 catalysts" FUEL, Bd. 69, April 1990 (1990-04), Seiten 448-455, XP002457661
- MARK, H.F., OTHMER, D.F., OVERBERGER, C.G., SEABORG, G.T.: "Kirk-Othmer Encyclopedia of Chemical Technology. Edition 3. Supplement Volume: Alcohol Fuels to Toxicology." 1978, WILEY & SONS , NEW YORK, US , XP002457662 Seite 220 - Seite 221
- WOLF DIETER DECKWER ET AL: 'Fischer-Tropsch synthesis in the slurry phase on manganese/iron catalysts' INDUSTRIAL & ENGINEERING CHEMISTRY PROCESS DESIGN AND DEVELOPMENT Bd. 21, Nr. 2, 01 April 1982, Seiten 222 - 231, XP055006992 DOI: 10.1021/i200017a005 ISSN: 0196-4305

## Beschreibung

### Stand der Technik

Rotschlamm entsteht bei der Aluminiumherstellung nach dem Bayer-Verfahren. Chemisch betrachtet stellt Rotschlamm ein Gemisch dar, welches hauptsächlich aus Eisen(111)-oxiden bzw. -hydroxiden, Titanoxiden, Aluminiumoxidresten, Quarzsand, Kalziumoxid, Natriumoxid und Natronlauge zusammensetzt ist. Der Name Rotschlamm stammt von seiner durch Eisen(III)-oxid hervorgerufenen roten Farbe. Die Aufarbeitung des Rotschlamms wird dadurch erschwert, dass die Partikel des Rotschlamms bedingt durch den Herstellungsprozess einen im Schnitt sehr geringen Durchmesser im Bereich zwischen 0,1-1 µm besitzen. Insbesondere eine Abtrennung des Eisen(III)-oxids von den restlichen Silikaten, Aluminaten und Oxiden stellt ein komplexes technisches Problem dar und wurde bislang nicht zufriedenstellend gelöst.

Zu jeder produzierten Tonne Aluminium fallen je nach Qualität des verwendeten Bauxits 0,5-1,5 Tonnen Rotschlamm als nicht vermeidbarer Begleiter an. Die dabei jedes Jahr entstehende Menge beträgt mehrere Millionen Tonnen und stellt zusammen mit dem bereits vorhandenen Rotschlamm ein ernsthaftes Problem dar. Da Rotschlamm bisher im Wesentlichen als Abfallprodukt betrachtet wird, wird er weitgehend ungenutzt durch Einlagerung in abgedichteten Deponien entsorgt. Die einzige Nutzung besteht dabei in der Wiedergewinnung der sich am Deponieboden absetzenden Natronlauge und ihrer Rückführung in das Bayer-Verfahren. Diese Form der Entsorgung führt neben Problemen des Umweltschutzes auch zu beträchtlichen finanziellen Problemen. Die Lagerung in Deponien ist teuer und aufwendig, da große Flächen und Anlagen benötigt werden und hohe Kosten für den Transport des Rotschlamms anfallen. Zudem sind die durch die Deponierung entstehenden Langzeitkosten nur schwer kalkulierbar und stellen ein zusätzliches wirtschaftliches Problem dar.

Zahlreiche Versuche wurden daher unternommen, um den bislang als Abfallprodukt betrachteten Rotschlamm in nutzbare Wertstoffe umzuwandeln und einer wirtschaftlichen Verwertung zuzuführen. Jeder vorteilhafte Ansatz sollte dabei das im Rotschlamm enthaltene Potenzial so weit wie möglich ausschöpfen und eine umfassende Verwertung der enthaltenen Komponenten bieten.

Aus Xiang et. al., "Low-temperature reduction of ferric iron in red mud" (TMS Light Metals (2001), Proceedings of the technical sessions, Technical TMS annual meeting, XX, XX, 2001, S. 157-162) ist ein Verfahren zur Reduktion von Eisenoxiden aus Rotschlamm zu Magnetit bekannt. Als Reduktionsmittel dient dabei Kohle, Holzkohle, Sägespäne oder Bagasse.

Die US 3,295,924 A offenbart ein Verfahren, bei welchem Rotschlamm zunächst filtriert und kalziniert wird. Das kalzinierte Material wird anschließend mit einem CO/H₂ enthaltenden Gas behandelt, welches durch partielle Verbrennung eines Kohlenwasserstoffs erzeugt wird.

Aus Piga et. Al, "Recovering Metals from red mud generated during alumina production" (JOM, Minerals, Metals & Materials Society, Warrendale, PA, US, vol. 45, no. 11, 1. November 1993, p. 54-59) ist es bekannt, dispergierten und mit Schwefel- oder Salzsäure neutralisierten Rotschlamm einer magnetischen Trennung zu unterwerfen. Vor der magnetischen Trennung kann der Eisenanteil im derart vorbehandelten Rotschlamm mit Hilfe von Chlorkohlenwasserstoffen zu Magnetit und/oder metallischem Eisen reduziert werden.

Aus der US 3,876,749 A ist ein Verfahren bekannt, bei welchem Rotschlamm mit Anthrazit bei Temperaturen bis 1500°C zu Eisen und Fe₂O₃-reicher Schlacke umgesetzt wird.

Die US 3 295 924 A offenbart ein Verfahren, bei welchem Rotschlamm filtriert, mit Hilfe von Gasen aus einer vollständigen Verbrennung eines Brennstoffs kalziniert und mit Hilfe von Gasen aus einer partiellen Verbrennung eines Brennstoffs reduziert wird.

Ein neueres Verfahren von Virotec International LTD, geschützt als "Basecon™ Technology", erreicht durch den Umsatz von Rotschlamm mit Meerwasser eine Verringerung des pH-Wertes auf etwa 9 und eröffnet dadurch verschiedene Anwendungsmöglichkeiten für den dealkalisierten Rotschlamm wie etwa den Einsatz als Flockungsmittel oder seine Verwendung als Behandlungsmittel für saure Abwässer bzw. saure Böden.

Nachteilig an diesem Verfahren ist der Umstand anzusehen, dass die Verwendung von jährlich etwa 1 Millionen Tonnen im Rahmen dieses Verfahrens weniger als 2 % der Jahresproduktion entspricht und es daher nicht geeignet ist, die jährlich anfallende Rotschlamm Menge zu bewältigen und insbesondere keine Lösung für die bereits deponierten Rotschlamm-Abfälle darstellt. Weiterhin ist als nachteilig anzusehen, dass kein umfassender Gebrauch der verschiedenen, im Rotschlamm enthaltenen Wertstoffe erfolgt und so das vorhandene wirtschaftliche und ökologische Potenzial nur zu einem Bruchteil genutzt wird.

Aufgabe der vorliegenden Erfindung ist es daher, ein großtechnisch realisierbares Verfahren zur möglichst umfassenden Verwertung von Rotschlamm zur Verfügung zu stellen, welches sowohl für den jährlich anfallenden wie auch für den bereits deponierten Rotschlamm einsetzbar ist.

### Darstellung der Erfindung

Die Aufgabe wird erfindungsgemäß durch ein Verfahren zur Wertstoffgewinnung mittels Rotschlamm mit den Merkmalen des Patentanspruchs 1 gelöst.

Vorteilhafte Ausgestaltungen mit zweckmäßigen und nicht-trivialen Weiterbildungen der Erfindung sind in den weiteren Patentansprüchen beschrieben.

Erfindungsgemäß wird Rotschlamm in einem Verfahren zur Wertstoffgewinnung mit folgenden Schritten eingesetzt: a) Reduzieren zumindest eines Teils eines im Rotschlamm enthaltenen Eisen(III)-oxids und/oder Eisen(III)-hydroxids mit wenigstens einem Reduktionsmittel, welches wenigstens einen Kohlenwasserstoff umfasst und b) Abtrennen wenigstens einer festen Phase des Reaktionsgemischs von wenigstens einer flüssigen und/oder gasförmigen Phase, wobei die feste Phase mindestens einen, zumindest Magnetit umfassenden Wertstoff umfasst und wobei als Reduktionsmittel Methan und/oder Erdgas und/oder Ethanol verwendet und zum Reduzieren über den Rotschlamm geleitet wird. Ein solches Verfahren bietet verschiedene Vorteile. Rotschlamm enthält neben Silikaten, Titanoxiden, Restnatronlauge und diversen anderen Verbindungen als Hauptkomponente Eisen(III)-oxid bzw. -hydroxid in Form von Hämatit und Goethit mit einem Gewichtsanteil zwischen 30 und 60%. Rotschlamm bietet sich daher in idealer Weise zur Wertstoffgewinnung durch Reduktion der enthaltenen Eisen(III)-Komponenten an. Als vorteilhaft ist dabei der Umstand anzusehen, dass das Reduktionsmittel selbst zu Wertstoffen oxidiert wird. In Abhängigkeit des gewählten Reduktionsmittels entsteht bei der Reaktion mit Eisen(III)-oxid bzw. Eisen(III)-hydroxid Synthesegas, Ethen oder Acetaldehyd, welche ihrerseits als zentrale Ausgangskomponenten verschiedener chemischer Reaktionen wichtige Wertstoffe darstellen. Methan bietet dabei den Vorteil, dass es in großen Mengen praktisch weltweit verfügbar ist und eine sehr kostengünstige Reaktionsdurchführung ermöglicht. Der Einsatz von Erdgas bietet den Vorteil, dass das Verfahren auch an abgelegenen Erdgaslagerstätten wie beispielsweise Alaska wirtschaftlich durchführbar ist. Das Erdgas wird in vorteilhafter Weise während des Verfahrens zusätzlich entschwefelt. Ebenso ist die Verwendung von Alkohol als Reduktionsmittel insbesondere unter Umweltschutzaspekten als vorteilhaft anzusehen, da so die Konvertierung eines bisher als Abfall eingestuften Produkts mit Hilfe eines nachwachsenden Rohstoffs ermöglicht wird und zusätzlich den vielseitig in der chemischen Industrie einsetzbaren Wertstoff Acetaldehyd liefert.

Die Reaktion kann dabei beispielsweise in einem Durchlauf-Reaktor durchgeführt werden. Denkbar sind jedoch auch andere geeignete Reaktorvorrichtungen wie etwa Drehrohröfen. Nach Abschluss der Reduktion, welche leicht durch den Farbwechsel von rot (Fe₂O₃) nach schwarz (Fe₃O₄) bestimmbar ist, liegen in Abhängigkeit des gewählten Kohlenwasserstoffs und der gewählten Reaktionsbedingungen zumindest eine feste Phase, bestehend aus Reduktionsprodukten und restlichem Rotschlamm, sowie eine flüssige und/oder gasförmige Phase vor. Mindestens eine dieser Phasen beinhaltet dabei einen durch die Reduktion gewonnenen Wertstoff. Dabei ist als Wertstoff vor allem das wertvolle Eisenerz Magnetit zu nennen, welches in der festen Phase zusammen mit Restoxiden, Aluminaten und -silikaten vorliegt. Rotschlamm stellt damit eine in Zeiten zunehmender Rohstoff-Verknappung wertvolle Quelle für Eisenerz dar, welches insbesondere in der Eisenverarbeitung zur Herstellung von Stählen benötigt wird. Die Konzentration an reinem Magnetit liegt dabei mit mindestens 90 % etwa doppelt so hoch wie die in hochwertigem Naturerz. Betrachtet man nicht nur die jährlichen anfallenden Mengen an Rotschlamm, sondern auch die vielen Millionen Tonnen an bereits deponiertem Rotschlamm, wird die Bedeutung des Verfahrens als einfache und kostengünstige Möglichkeit zur ökologisch und wirtschaftlich vorteilhaften Eisenerz-Gewinnung deutlich. Das Abtrennen der festen von der flüssigen und/oder gasförmigen Phase wird in einfacher Weise mit Hilfe eines mit dem Reaktor gekoppelten Gasseparators und/oder Feststoffabscheiders durchgeführt. Denkbar sind allerdings auch andere Trennverfahren wie beispielsweise Flotationstrennverfahren.

In einer vorteilhaften Ausgestaltung des erfindungsgemäßen Verfahrens ist vorgesehen, dass die in Schritt b) abgetrennte gasförmige Phase zumindest Kohlenmonoxid und/oder Wasserstoff umfasst. Insbesondere in Kombination mit der bereits erwähnten Verwendung von Methan und/oder Erdgas als Reduktionsmittel, liefert das Verfahren neben Magnetit auch Synthesegas (CO + H₂) als zusätzlichen Wertstoff in der gasförmigen Phase. Das bei der Umwandlung von Methan entstehende Synthesegas besitzt im Vergleich zu Synthesegas, welches durch andere denkbare Edukte gebildet wird, den höchsten Anteil an Wasserstoff im Verhältnis zu Kohlenmonoxid. Dadurch eignet es sich besonders als Ausgangskomponente verschiedener wichtiger chemischer Reaktionen wie beispielsweise der Methanol-Synthese oder der Umwandlung von Alkenen in um eine Methylengruppe verlängerte Aldehyde gemäß der sogenannten Oxosynthese.

In einer weiteren vorteilhaften Ausgestaltung des erfindungsgemäßen Verfahrens ist vorgesehen, dass das Verfahren nach Schritt b) einen zusätzlichen Schritt c) umfasst, welcher ein Auftrennen der abgetrennten festen Phase in wenigstens eine erste magnetisierbare und eine zweite nicht-magnetisierbare Komponente beinhaltet, wobei die erste Komponente wenigstens Magnetit und die zweite Komponente wenigstens ein Oxid und/oder Silikat umfasst. Als vorteilhaft ist dabei der Umstand anzusehen, dass auf diese Weise eine Zerlegung von Rotschlamm in ein magnetisierbares Eisenerz und einen nicht-magnetisierbaren, eisenarmen Restmineralstock und damit eine umfassende Verwertung der verschiedenen Rotschlamm-Komponenten ermöglicht wird. In einer weiteren vorteilhaften Ausgestaltung der Erfindung ist vorgesehen, dass der zusätzliche Verfahrensschritt c) das Verwenden mindestens eines Magnetabscheiders umfasst. Da Magnetit eine Spinellstruktur AB₂O₄ besitzt, in der Eisen(II)-Ionen die oktaedrischen und Eisen(III)-Ionen die tetraedrischen Plätze besetzen, ist es ferromagnetisch und stark magnetisierbar. Mit Hilfe eines Magnetabscheiders kann so eine technisch besonders einfache und kostengünstige Möglichkeit geschaffen werden, den Rotschlamm praktisch quantitativ in magnetisierbares Eisenerz und nicht-magnetisierbare, eisenarme Komponenten aufzutrennen.

In einer weiteren vorteilhaften Ausgestaltung des erfindungsgemäßen Verfahrens ist vorgesehen, dass das Verfahren nach Schritt b) und/oder gegebenenfalls c) den folgenden zusätzlichen Schritt d) umfasst, wobei Schritt d) im Aufreinigen der gasförmigen Phase besteht und das Aufreinigen vorzugsweise das Entfernen von CO₂ aus der gasförmigen Phase umfasst. Dieser Schritt stellt in vorteilhafter Weise sicher, dass das in Schritt c) abgetrennte Synthesegas optimal auf die Anforderungen eventueller weiterer Verarbeitungsverfahren abgestimmt wird. Der Aufreinigungsschritt umfasst dabei vorzugsweise ein Entfernen von CO₂ aus der gasförmigen Phase, welches über die allgemeine Gleichung

CO₂ + C ↔ 2 CO

mit Kohlenmonoxid in Zusammenhang steht. Denkbar sind aber auch sonstige Maßnahmen zur Aufreinigung der gasförmigen Phase wie beispielsweise Wasserentfernung und Trocknung, Rußabtrennung, Entschwefelung oder Maßnahmen zur Einstellung des gewünschten CO:H₂ Verhältnisses.

In einer weiteren vorteilhaften Ausgestaltung der Erfindung ist vorgesehen, dass das Aufreinigen in Schritt d) das Verwenden eines modifizierten Benfield™-Prozesses umfasst. Dabei wird die abgetrennte gasförmige Phase in einem zyklischen Verfahren mittels warmer Kaliumcarbonat-Lösung von CO₂, H₂S und anderen sauren Komponenten befreit. Vorteilhaft ist an diesem Verfahren der Umstand anzusehen, dass in einem Schritt eine Entfernung von unerwünschtem CO₂ und eine Entschwefelung der gasförmigen Phase durchgeführt wird. Ein weiterer Vorteil ist die geringe Löslichkeit des aufzureinigenden Synthesegases in der verwendeten Kaliumcarbonat-Lösung. Zusätzlich umfasst der modifizierte Benfield™-Prozess ausschließlich Ausgangsverbindungen, die zu geringen Kosten weltweit bezogen werden können.

In einer weiteren vorteilhaften Ausgestaltung des erfindungsgemäßen Verfahrens ist vorgesehen, dass das Verfahren nach Schritt b) und/oder gegebenenfalls Schritt c) und/oder d) den folgenden zusätzlichen Schritt e) umfasst, welcher ein Durchführen eines Kohlenwasserstoff-Synthese-Verfahrens, insbesondere eines Fischer-Tropsch- und/oder eines Gas-To-Liquids-Verfahrens beinhaltet, wobei mindestens ein Edukt der Synthese mindestens eine aus der in Schritt b) abgetrennten gasförmigen Phase stammenden Komponente umfasst, mindestens ein Produkt mindestens einen Kohlenwasserstoff umfasst und wobei das Synthese-Verfahren das Verwenden wenigstens einer katalytisch wirksamen Komponente umfasst. Beim Fischer-Tropsch-Verfahren handelt es sich um ein großtechnisches Verfahren zur Umwandlung von Synthesegas (CO/H₂) in flüssige Kohlenwasserstoffe. Der allgemeine Mechanismus lässt sich mit folgender Formel beschreiben:

n CO + (2n+1) H₂ → CₙH₂ₙ₊₂ + n H₂O

Die Reaktion läuft katalytisch beschleunigt üblicherweise unter Druck bei Temperaturen zwischen 200°C und 350°C ab und liefert neben Paraffinen, Alkenen und Alkoholen vor allem Benzin und Öle. Dies stellt besonders im Hinblick auf die schwindenden Rohölvorkommen einen wichtigen alternativen Syntheseweg zur Kraftstoffgewinnung dar. Durch Fraktionierung kann aus den erhaltenen Kohlenwasserstoffen unter anderem ein hochwertiger Kraftstoff für Dieselmotoren gewonnen werden. Dieser hat den Vorteil farb- und geruchlos, völlig schwefelfrei und frei von aromatischen oder organischen Stickstoff-Verbindungen zu sein. Zusätzlich ist er biologisch abbaubar und ungiftig. Sollte das durch die Reduktion des Eisen(III)-Anteils erhaltene Synthesegas nicht den zum Durchführen des Fischer-Tropsch-Verfahrens notwendigen Wasserstoffanteil besitzen, kann dieser nachträglich zugemischt werden. Eine weitere vorteilhafte Möglichkeit zur Gewinnung zusätzlicher Wertstoffe stellt in Kombination mit der Verwendung von Erdgas als Reduktionsmittel in Schritt a) das Durchführen eines GtL-Verfahrens (Gas-to-Liquids) dar. Dabei wird zunächst Erdgas durch Zufuhr von Sauerstoff zu Synthesegas umgewandelt, welches in oben beschriebener Weise zu flüssigem Kohlenwasserstoff weiterverarbeitet wird. Die genannten Vorteile der Fischer-Tropsch-Produkte gelten daher auch für GtL-Produkte. Als für das Fischer-Tropsch-Verfahren geeignete Katalysatoren sind in der Literatur unter anderem verschiedene Cobalt- und Eisen-Katalysatoren beschrieben.

In einer weiteren vorteilhaften Ausgestaltung des erfindungsgemäßen Verfahrens ist vorgesehen, dass zumindest eine Komponente des Rotschlamms selbst die katalytisch wirksame Komponente ist. Als besonders wirksamer Katalysator zur Durchführung eines Fischer-Tropsch-Verfahrens ist dem Fachmann Magnetit bekannt. Daher ist in vorteilhafter Weise vorgesehen, dass durch Reduktion des Eisen(III)-Anteils von Rotschlamm in Schritt a) hergestellter und in Schritt b) und/oder c) abgetrennter Magnetit als katalytisch wirksame Komponente des Fischer-Tropsch-Verfahrens verwendet wird. Dadurch ermöglicht die Konvertierung von Rotschlamm im Rahmen des erfindungsgemäßen Verfahrens Zugang zu verschiedenen weiteren Wertstoffen und stellt eine günstige, umfassende, ökologisch und wirtschaftlich bedeutsame Verwertungsmöglichkeit des bislang als Abfall begriffenen Rotschlamms dar.

Ein nicht erfindungsgemäßer Aspekt betrifft die Verwendung einer in Schritt c) abgetrennten zweiten, nicht magnetisierbaren Komponente als wenigstens ein Zementzuschlagstoff. Der nach der Abtrennung von Magnetit erhaltene eisenarme Restmineralstock eignet sich dabei in vorteilhafter Weise als Zementzuschlagstoff, was ansonsten wegen der durch den hohen Eisengehalt von Rotschlamm bedingten komplexen Reaktionen, die als Rostbildung bezeichnet werden, nicht möglich wäre. Denkbar ist auch das zusätzliche Hinzufügen eines bestimmten Masseanteils an Calciumcarbonat (Kalkstein). Auf diese Weise wird die Mineralbildung gefördert und liefert einen hydraulischen Zement. Zusätzlich werden eventuell vorhandene alkalische Komponenten durch Nebenreaktionen zum großen Teil in Silikate eingebunden, so dass das Endprodukt einen schwach alkalischen pH-Wert im Bereich zwischen 7 und 9 besitzt. Die Verwendung des Restmineralstocks bietet somit zusammen mit den bereits beschriebenen Verwertungsmöglichkeiten die vollständige Verwertung aller Komponenten von Rotschlamm. Auf diese Weise erübrigt sich die Notwendigkeit der Entsorgung und insbesondere der Einlagerung des Rotschlamms in Deponien. Damit verbunden sind nicht nur enorme Einsparungen durch den Wegfall der Deponie-bezogenen Kosten, sondern im Gegenteil besondere Vorteile durch die wirtschaftliche Verwertung der produzierten Wertstoffe.

Ein weiterer nicht erfindungsgemäßer Aspekt betrifft die Verwendung von mindestens einer aus der in Schritt b) gemäß Anspruch 1 abgetrennten gasförmigen Phase stammenden Komponente als Edukt zum Durchführen eines Kohlenwasserstoff-Synthese-Verfahrens, insbesondere eines Fischer-Tropsch- und/oder eines Gas-To-Liquids-Verfahrens, wobei mindestens ein Produkt mindestens einen Kohlenwasserstoff umfasst und wobei das Synthese-Verfahren das Verwenden wenigstens einer katalytisch wirksamen Komponente umfasst. Die dadurch realisierten Vorteile sind bereits den vorhergehenden Vorteilsbeschreibungen zu entnehmen.

Es kann vorgesehen sein, dass zumindest eine Komponente des Rotschlamms selbst die katalytisch wirksame Komponente ist. Wie bereits erwähnt, ist dem Fachmann Magnetit als besonders wirksamer Katalysator zur Durchführung eines Fischer-Tropsch-Verfahrens bekannt. Daher ist in vorteilhafter Weise vorgesehen, dass durch Reduktion des Eisen(III)-Anteils von Rotschlamm in Schritt a) hergestellter und in Schritt b) und/oder c) abgetrennter Magnetit als katalytisch wirksame Komponente des Fischer-Tropsch-Verfahrens verwendet wird.

Weitere Vorteile, Merkmale und Einzelheiten der Erfindung ergeben sich aus den nachfolgenden Beschreibungen mehrerer Ausführungsbeispiele.

### Beispiel 1:

Getrockneter Rotschlamm mit einem Wassergehalt unter 5 % wird einer Reduktion der Eisen(III)-Salze zu Magnetit unterzogen. Die Reduktion zu Magnetit erfolgt dabei durch Überleiten von Methan bei einer Temperatur zwischen 250°C und 800°C. Die Abtrennung der festen von der gasförmigen Phase erfolgt nach Abschluss der Reduktion mit Hilfe eines Feststoffabscheiders. Das Ende der Reaktion kann dabei in einfacher Weise durch den Farbwechsel von rot (Fe₂O₃) nach schwarz (Fe₃O₄) bestimmt werden. Die anschließende Auftrennung der festen Phase in eine magnetisierbare und eine nicht-magnetisierbare Phase wird in einfacher Weise mit Hilfe eines Magnetabscheiders durchgeführt. Dabei wird Magnetit vom übrigen Mineralgemisch abgetrennt und kann in bekannter Weise weiterverarbeitet werden. Das übrige Mineralgemisch wird mit 10 % Calciumcarbonat (w/w) versetzt und als Zementzuschlagstoff verwendet.

### Beispiel 2:

Rotschlamm mit einem Wassergehalt unter 20 % wird einer Reduktion der enthaltenen Eisen(III)-oxide und Eisen(III)-hydroxide zu Magnetit unterworfen. Die Reduktion zu Magnetit erfolgt dabei durch Überleiten von Methan, Erdgas oder Ethanol unter unterstöchiometrischen Bedingungen bei Temperaturen zwischen 650-1100°C in einem Wirbelschichtreaktor. In dieser Reduktionsstufe werden die unmagnetischen Eisen(III)-oxide und -hydroxide praktisch vollständig zu Magnetit reduziert. Zusätzlich bilden sich aufgrund des relativen Sauerstoffmangels reduzierend wirkende Kohlenstoffpartikel. Die gasförmigen Reaktionsprodukte umfassen neben H₂O und CO₂ insbesondere CO, wobei sich das entsprechend der endothermen Boudouard-Reaktion

CO₂ + C ↔ 2 CO

einstellende Gleichgewicht gemäß dem Prinzip von Le Chatelier durch Temperaturerhöhung bzw. durch Drucksenkung auf die Produktseite verschoben werden kann. So wird beispielsweise bei einer Temperatur von 1000°C und einem Druck von 10⁵ Pa eine Ausbeute von mindestens 98 % CO erzielt. Bei einer verringerten Temperatur zwischen 650-700°C sinkt die Ausbeute an CO unter 50 %. Außerdem entsteht in Nebenreaktionen der Pyrolyse unter katalytischer Wirkung der aktivierten Eisenoxide Wasserstoff.

Die gasförmige Phase wird anschließend von der festen, Magnetit umfassenden Phase abgetrennt und aufgereinigt, wobei insbesondere das entstandene CO₂ entfernt wird. Das Aufreinigen erfolgt dabei mit Hilfe eines modifizierten Benfield™-Prozesses. Das aufgereinigte CO- und H₂-reiche Gas wird anschließend wieder in den Reduktions-Prozess zurückgeführt und zur weiteren Reduktion des Eisen(III)-oxids und Eisen(III)-hydroxids im Kreislauf eingesetzt.

Die abgetrennte feste Phase, welche das magnetische Eisenerz Magnetit sowie nebengeordnete Titaneisenerzkomponenten umfasst, wird nach dem Abkühlen mit Hilfe eines Magnetabscheiders vom nichtmagnetischen Restmineralstock separiert. Dieser enthält vor allem ein Alumosilikate enthaltendes Gemisch aus Tonerden und Quarzsand (10 %) mit geringen Anteilen von Kalk (3 %). Dieses kann beispielsweise als Zementzuschlagstoff, als Bodenverbesserer oder als Mineraldünger eingesetzt werden, da die Tonmineralien entscheidend für die Wasserhaltung von Böden sind. Bei der Wasserhaltung von Böden handelt es sich um einen Aspekt, der besonders für die Bauxitabbauländer wichtig ist, weil die Bodenzerstörung in tropischen Ländern gerade durch das Auswaschen der Tonmineralien mitverursacht wird.

### Beispiel 3:

Entwässerter Rotschlamm wird wie zuvor beschrieben mit Erdgas als preisgünstigem Reduktionsmittel bei Temperaturen zwischen 230-650°C unter Sauerstoffabschluß umgesetzt. Die Reaktion umfasst dabei eine katalytische partielle Oxidation bei moderaten Temperaturen, wobei insbesondere Eisen-(III)-oxide reduziert werden und Methan in einem Reformingprozess zu Kohlenmonoxid CO und Wasserstoff H₂ nach der Gleichung:

CH₄ + Fe₂O₃/FeO(OH) → CO + 2 H₂ + Fe₃O₄

oxidiert. Dadurch entstehen prozessintern weitere reduzierende Gase, deren Überschuss als Brenngas oder in anderen chemischen Verfahren verwendet werden kann und ein wertvolles Nebenprodukt darstellt. Gleichzeitig werden in Nebenreaktionen Kohlendioxid und Wasser gebildet. Der Reaktion muss Wärme zugeführt werden, da die Hauptreaktion endotherm ist.

Der Prozess wird aus ökonomischen Gründen kontinuierlich in einem Durchlaufreaktor geführt. Das heiße Mineralgemisch wird beispielsweise über einen Schneckenextruder ausgetragen und über eine Wärmetauscher-Strecke zur Rückgewinnung von Wärme für die Entwässerung geführt. Danach werden die zusammengebackenen Mineralpartikel zwischen Walzen wieder zu dem feinstgemahlenen Ausgangsprodukt zerdrückt. Ablaufende Mineralisierungsprozesse während der Entstehung von Magnetit sorgen für eine verbesserte Phasenseparation durch den in der nächsten Stufe vorgesehenen Magnetabscheider und verhindern das Verhaken magnetischer oder unmagnetischer Mineralpartikel.

Am Ende werden Magnetit und getrennt davon eine Mischung basischer Tonminerale mit Kalk und Quarzsand erhalten, das wie bereits beschrieben weiter verwendet wird. Die Ausbeute an Magnetit beträgt mindestens 75 % und kann durch fachübliche Maßnahmen bis auf 95 % gesteigert werden.

Rotschlamm aus Bauxitaufschluss enthält Eisenoxide/-hydroxide in Form der Mineralien Hämatit Fe₂O₃ und Goethit FeO(OH) in 42-50 % (w/w), Tonmineralien der Alumosilikatgruppe mit >30 % (w/w), SiO₂ in Mengen zwischen 5-10 % (w/w) sowie Kalk aus der Rückgewinnung von Natronlauge in 3-5 % (w/w). Der Wassergehalt des Rotschlamms beträgt üblicherweise zwischen 25-40 % (v/w). Die Gewinnung der Eisenoxide und des Titans als Ilmenit ist in einfacher Weise möglich, wenn die im Rotschlamm vorliegenden Oxide/Hydroxide der Metalle unter reduzierenden Bedingungen einer thermischen Behandlung bei Temperaturen von mindestens 750°C bis max. 1100°C ausgesetzt werden. Dabei bilden sich Ilmenit aus Rutil (TiO₂) und den Eisenverbindungen: Die Eisenminerale werden zur thermodynamisch stabilsten Verbindung Magnetit umgesetzt. Diese beiden Mineralien sind aufgrund ihrer stark magnetischen Eigenschaften leicht mit bekannten Techniken vom unmagnetischen Rest abtrennbar. Ebenfalls können bekannte Flotationstechniken zur Trennung benutzt werden.

Das Verfahren wird im folgenden, nicht zur Erfindung gehörenden Beispiel mit Kohlenstaub als Reduktionsmittel durchgeführt. Zur Durchführung wird Rotschlamm in einem Vormischer mit 3-20 % (w/w) Kohlenstaub vermischt und über eine mit Abwärme vorgeheizte Trocknungsstrecke zu einem Drehrohrofen geführt. Die Redoxreaktionen erfolgen in diesem Ofen kontinuierlich wahlweise mit oder ohne Hilfe eines Stützfeuers. Derzeit übliche Alumina-Fabriken verfügen über Kalzinierungsöfen mit Kapazitäten bis zu 8000 t pro Tag. Diese Technologie kann hier ohne große Modifikation eingesetzt werden.

Die Prozeßführung wird vorteilhafterweise allotherm gestaltet, da sowohl stark exotherme Reaktionen wie die Oxidierung des Kohlenstoffs (C+O₂ → CO₂) als auch endotherme Reaktionen wie die Bildung von Kohlenmonoxid nach der Boudouard-Reaktion (2 CO ← C + CO₂) gleichzeitig stattfinden. Die Reduzierung zu Magnetit beträgt unter diesen Bedinungen mindestens 75 %, kann aber durch fachübliche Maßnahmen leicht bis 90 % und mehr gesteigert werden.

Das reduzierte feine Pulver wird im Anschluss in eine Kühltrommel mit Wärmetauscher transportiert und in der nächsten Stufe nach ausreichender Abkühlung einem Magnetabscheider zugeführt. Dieser trennt die Komponenten Magnetit und Ilmenit (Eisentitanerz) aufgrund ihrer starken magnetischen Eigenschaften vom nichtmagnetischen Restmineralstock ab, welcher im Wesentlichen unmagnetische Tonmineralien, Quarz, Kalk sowie geringe Mengen an unmagnetischem Eisenerz umfasst.

Die Tonmineralien können als Zementzuschlag eingesetzt werden, da ihre chemische Zusammensetzung den in Zement vorkommenden Stoffen weitgehend entspricht und somit sogenannter Eisenzement hergestellt werden kann. Durch Zugabe von weiterem Branntkalk kann der hydraulische Charakter des Zementzuschlags auf den jeweiligen Bedarf abgestimmt werden. Darüber hinaus kann der unmagnetische Mineralrest wegen der Tonmineralien als Wasserhalter bzw. aufgrund des Kalk- und Eisengehaltes als Bodenverbesserer bzw. Mineraldünger verwendet werden.

## Patentansprüche

1. Verfahren zur Wertstoffgewinnung mittels Rotschlamm, welcher bei der Aluminiumherstellung durch das Bayer-Verfahren anfällt, mit folgenden Schritten:
a) Reduzieren zumindest eines Teils eines im Rotschlamm enthaltenen Eisen(III)-oxids und/oder Eisen(III)-hydroxids mit wenigstens einem Reduktionsmittel, welches wenigstens einen Kohlenwasserstoff umfasst; und
b) Abtrennen wenigstens einer festen Phase des Reaktionsgemischs von wenigstens einer flüssigen und/oder gasförmigen Phase, wobei die feste Phase mindestens einen, zumindest Magnetit umfassenden Wertstoff umfasst,
**dadurch gekennzeichnet,**
**dass** Methan und/oder Erdgas und/oder Ethanol als Reduktionsmittel verwendet und zum Reduzieren über den Rotschlamm geleitet wird.

2. Verfahren nach Anspruch 1,
**dadurch gekennzeichnet,**
**dass** die in Schritt b) abgetrennte gasförmige Phase wenigstens Kohlenmonoxid und/oder Wasserstoff umfasst.

3. Verfahren nach einem der vorhergehenden Ansprüche,
**dadurch gekennzeichnet,**
**dass** das Verfahren nach Schritt b) folgenden zusätzlichen Schritt umfasst:
c) Auftrennen der abgetrennten festen Phase in wenigstens eine erste magnetisierbare und eine zweite nicht-magnetisierbare Komponente, wobei die erste Komponente wenigstens Magnetit und die zweite Komponente wenigstens ein Oxid und/oder Silikat umfasst.

4. Verfahren nach Anspruch 3,
**dadurch gekennzeichnet,**
**dass** Schritt c) das Verwenden mindestens eines Magnetabscheiders umfasst.

5. Verfahren nach einem der vorhergehenden Ansprüche,
**dadurch gekennzeichnet,**
**dass** das Verfahren nach Schritt b) und/oder gegebenenfalls c) folgenden zusätzlichen Schritt umfasst:
d) Aufreinigen der gasförmigen Phase, wobei das Aufreinigen vorzugsweise das Entfernen von CO₂ aus der gasförmigen Phase umfasst.

6. Verfahren nach Anspruch 5,
**dadurch gekennzeichnet,**
**dass** das Aufreinigen einen modifizierten Benfield-Prozess umfasst.

7. Verfahren nach einem der vorhergehenden Ansprüche,
**dadurch gekennzeichnet,**
**dass** das Verfahren nach Schritt b) und/oder gegebenenfalls Schritt c) und/oder d) folgenden zusätzlichen Schritt umfasst:
e) Durchführen eines Kohlenwasserstoff-Synthese-Verfahrens, insbesondere eines Fischer-Tropsch- und/oder eines Gas-To-Liquids-Verfahrens, wobei mindestens ein Edukt der Synthese mindestens eine aus der in Schritt b) abgetrennten gasförmigen Phase stammenden Komponente umfasst, mindestens ein Produkt mindestens einen Kohlenwasserstoff umfasst und wobei das Synthese-Verfahren das Verwenden wenigstens einer katalytisch wirksamen Komponente umfasst.

8. Verfahren nach Anspruch 7,
**dadurch gekennzeichnet,**
**dass** zumindest eine Komponente des Rotschlamms selbst die katalytisch wirksame Komponente ist.

## Claims

1. Method for obtaining valuable products by means of red mud, which arises in the aluminum production by the Bayer process, including the following steps:
a) reducing at least one part of an iron(III) oxide and/or iron(III) hydroxide contained in the red mud with at least one reductant, which includes at least one hydrocarbon; and
b) separating at least one solid phase of the reaction mixture from at least one liquid and/or gaseous phase, wherein the solid phase includes at least one valuable product including at least magnetite,
**characterized in that**
methane and/or natural gas and/or ethanol are used as reductant and for reducing are passed over the red mud.

2. Method according to claim 1,
**characterized in that**
the gaseous phase separated in step b) includes at least carbon monoxide and/or hydrogen.

3. Method according to anyone of the preceding claims,
**characterized in that**
the method includes the following additional step after step b):
c) separating the separated solid phase into at least a first magnetizable and a second non-magnetizable component, wherein the first component includes at least magnetite and the second component includes at least one oxide and/or silicate.

4. Method according to claim 3,
**characterized in that**
step c) includes use of at least one magnetic separator.

5. Method according to anyone of the preceding claims,
**characterized in that**
the method includes the following additional step after step b) and/or optionally c):
d) cleaning the gaseous phase, wherein the cleaning preferably includes the removal of CO₂ from the gaseous phase.

6. Method according to claim 5,
**characterized in that**
the cleaning includes a modified Benfield process.

7. Method according to anyone of the preceding claims,
**characterized in that**
the method includes the following additional step after step b) and/or optionally step c) and/or d):
e) performing a hydrocarbon synthesis process, especially a Fischer-Tropsch and/or a gas to liquid process, wherein at least one educt of the synthesis includes at least one component originating from the gaseous phase separated in step b), at least one product includes at least one hydrocarbon, and wherein the synthesis process includes use of at least one catalytically active component.

8. Method according to claim 7,
**characterized in that**
at least one component of the red mud itself is the catalytically active component.

## Revendications

1. Procédé de récupération de matériaux au moyen d'une boue rouge, laquelle est produite lors de la fabrication de l'aluminium par le procédé Bayer, avec les étapes suivantes :
a) réduction d'au moins une partie d'un oxyde de fer (III), contenu dans la boue rouge et / ou d'hydroxyde de fer (III) avec au moins un agent de réduction, lequel comprend au moins un hydrocarbure et
b) séparation d'au moins une phase solide du mélange réactionnel d'au moins une phase liquide et / ou gazeuse, moyennant quoi la phase solide comprend au moins un matériau, comprenant au moins de la magnétite,
**caractérisé en ce**
**que** le méthane et / ou le gaz naturel et / ou l'éthanol est utilisé comme agent de réduction et pour la réduction par l'intermédiaire de la boue rouge.

2. Procédé selon la revendication 1,
**caractérisé en ce**
**que** la phase gazeuse, séparée au cours de l'étape b), comprend au moins du monoxyde de carbone et / ou de l'hydrogène.

3. Procédé selon l'une des revendications précédentes,
**caractérisé en ce**
**que** le procédé selon l'étape b) comprend l'étape supplémentaire suivante :
c) division de la phase solide séparée en au moins un premier composant magnétisable et un deuxième non magnétisable, moyennant quoi le premier composant comprend au moins de la magnétite et le deuxième composant au moins un oxyde et / ou du silicate.

4. Procédé selon la revendication 3,
**caractérisé en ce**
**que** l'étape c) comprend au moins un séparateur magnétique.

5. Procédé selon l'une des revendications précédentes,
**caractérisé en ce**
**que** le procédé comprend, après l'étape b) et / ou, le cas échéant, l'étape c), l'étape supplémentaire suivante :
d) purification de la phase gazeuse, moyennant quoi la purification comprend de préférence l'élimination de CO₂ de la phase gazeuse.

6. Procédé selon la revendication 5,
**caractérisé en ce**
**que** la purification comprend un procédé de Benfield modifié.

7. Procédé selon l'une des revendications précédentes,
**caractérisé en ce**
**que** le procédé comprend, après l'étape b) et / ou, le cas échéant, les étapes c) et / ou d), l'étape supplémentaire suivante :
e) exécution d'un procédé de synthèse d'hydrocarbure, en particulier d'un procédé Fischer-Tropsch et / ou d'un procédé de liquéfaction du gaz, moyennant quoi au moins un réactif de la synthèse comprend au moins un composant, provenant de la phase gazeuse, séparée au cours de l'étape b), au moins un produit comprend au moins un hydrocarbure et moyennant quoi le procédé de synthèse comprend l'utilisation d'au moins un composant catalytiquement efficace.

8. Procédé selon la revendication 7,
**caractérisé en ce**
**qu'**au moins un composant de la boue rouge est lui-même le composant catalytiquement efficace.
